Europäisches Patentamt

European Patent Office

Office européen des brevets

(11) Publication number: **0 227 048**
**A2**

## (12) EUROPEAN PATENT APPLICATION

(21) Application number: **86117663.4**

(22) Date of filing: **18.12.86**

(51) Int. Cl.⁴: **C08K 5/14 , C08L 23/02 , C08F 4/32**

(30) Priority: **24.12.85 US 813095**

(43) Date of publication of application:
**01.07.87 Bulletin 87/27**

(84) Designated Contracting States:
**BE DE FR GB IT NL**

(71) Applicant: **Albee, Paul J., Jr.**
**3204 Adams Drive**
**Bensalem, Pennsylvania(US)**

(72) Inventor: **Albee, Paul J., Jr.**
**3204 Adams Drive**
**Bensalem, Pennsylvania(US)**

(74) Representative: **Baillie, Iain Cameron**
**c/o Ladas & Parry Isartorplatz 5**
**D-8000 München 2(DE)**

(54) **Peroxide concentrate and polymer carrier.**

(57) A peroxide catalysts concentrate is provided including one or two polymers chosen with the criteria that the polymers form a homogeneous composition that the melt index composition be in the range of 250 to 2500 grams per ten minutes, that the average softening point of the composition be in the range of 50 degrees to 115 degrees centigrade and that the melting range peaks of the polymer differ by at least 30 centigrade degrees offering improved stability and utility in essentially every kind of processing equipment with essentially no degradation or loss of peroxide activity with the added advantage of being able to use low volatility and highly active peroxides with a one hour half-life down to 95°C.

EP 0 227 048 A2

This invention is a polymeric composition to act as a carrier for peroxide compounds to be added to bulk polymeric compositions for further processing. This invention also involves peroxide compound concentrates to be added to the bulk thermoplastic polymer compositions and the method of producing the concentrates.

Peroxides are added to thermoplastic polymers to achieve a number of a qualities and physical characteristics including the reduction and narrowing of the molecular weight of polypropylene and to obtain a photo and biodegradable polymer by including the peroxide in various polymers, in particular polyethylene. Unfortunately, those peroxides that are generally the most active and most effective in the final use are also the peroxide compounds that are most difficult to handle during processing, creating substantial processing difficulties including safety risks to the operators and damage to the equipment. The utility and the difficulties of adding peroxide compounds by the processor of polypropylene is described in the U. S. Patent No. 4,451,589 to Michael T. Norman, et al, assigned to Kimberly-Clark Corporation issued May 29, 1984, incorporated herein by reference. In the Kimberly-Clark compositions, the peroxides are added to polypropylene or copolymers of propylene and butylene to form a concentrate degrading some of the polymer and the peroxide during a fast extrusion processing procedure. The Kimberly-Clark process works well with the less active and less volatile peroxides and is much less effective and produces substantial losses during processing of the more active peroxides such as popular Lupersol 101 available from Lucidol Division, Penwalt Corporation (2,5-dimethyl 2,5 bis (t-butylperoxy) hexane). In the Kimberly-Clark process losses of about 4% of the injected peroxide and substantially reduced carrier viscosity and varying results from batch to batch. The more volatile and active peroxides cannot be utilized. There is a need to produce a concentrate with essentially no loss of peroxide and no chemical change in the carrier during production of the concentrate. This avoids the necessity of varying compositions to compensate for differing activity levels of the peroxide and other problems that result when the dwell time in the concentrate processing equipment varies. It has been observed that although the average extruder residence time may be quite short, such as a few minutes, actual processing is not so perfect as that "average" suggests. When seconds matter to the amount of degradation of the peroxide, even a slight processing change will affect the end product properties. Further, there is a "hang up" factor, particularly as the polymer approaches the extruder die wherein portions of the polymer melt tend to hand up in the die area with substantial increased residence time. Thus, portions of the polymer melt may suffer substantial cross-linking or polymer degradation resulting in nonuniform characteristics and poor performance.

In addition, there are certain end-use applications such as fiber and film applications wherein the dispersion of the peroxide is absolutely critical. The peroxide is typically injected in liquid form into the extruder or added as a solid to the polymer prior to processing. Unless the peroxide is introduced in a highly stable form or in a carefully controlled manner, inconsistant and poor physical characteristics of the fiber or film will result.

The Kimberly-Clark process and other compositions do not achieve these aims nor do they attain the objects of the present invention detailed below.

This invention is a polymer composition to be used as a carrier for peroxide compounds. The polymer composition is a homogeneous composition, preferably including at least two thermoplastic or wax polymers. The polymer composition is chosen such that the melt index of the composition in the range of about 250 to about 2500 grams per ten minutes at 190°C and, that the average softening point of the polymer composition is in the range of about 50 degrees to about 115 degrees centigrade. In addition, the melting point range of the polymer composition must be broad having at least two melting temperatures at which a substantial portion of the polymer composition melts at each temperature.

As the softening point is reduced toward the lower limit, the strength and processing characteristics of the polymer characteristics becomes too soft and cannot be easily be pelletized and compounded into a concentrate form that is easily handlable. As the softening point increases past the higher limit, the processing of the peroxide concentrate tends to begin activating the peroxide to degrade the polymer or cause it to cross link or that the polymers have or form a higher color intensity. As the melt index is decreased forming a higher melt viscosity, the processing of the concentrates develops too high a shear requiring higher processing temperatures and more peroxide degradation. As the melt index is increased forming a lower melt viscosity, the integrity of the concentrate is limited with poor hot strength and poor processing characteristics. The narrowing of the softening point range reduces effective mixing and entrainment of the peroxide compounds narrowing the processing temperature range reducing uniformity and stability of the concentrate.

Although many peroxide compounds may be entrained in the compositions of the present invention and using the methods of the present invention excellent results have been obtained with a variety of peroxides including but no limited to 2,5-Dimethyl-2,5-Di (t-butylperoxy) hexane (supplied by Lucidol Division of Penwalt under the trade designations Lupersol 101 (90% active liquid) and Luperco 101-XL (45% solid on inert filler), dicumyl peroxide in a variety of forms, t-butyl cumyl peroxide (Lupersol 801-90% liquid), di-t-butyl peroxide (98.5% active liquid), and 2,5-dimethyl, 2,5-di (t-butylperoxy) hexyne-2) (Lupersol 130 liquid and Lupersol 130-XL-45% on inert filler), t-butylperoxy-maleic acid (Luperox PMA and Luperco PMA-40-40% paste in a proprietary formula). The Kimberly-Clark process and compositions do not include dicumyl peroxide as that peroxide is too reactive and unstable to be satisfactorily processed according to that invention. Other peroxides that may be used in the present invention include t-Butyl Cumyl Peroxide - (Lupersol 801), Di-t-Butyl Peroxide, 2,5-Dimethyl-2, 5-di (t-butylperoxy) hexyne-3 (Lupersol 130), t-Butylperoxy-isobutyrate (Lupersol 80), t-Butylperoxy-maleic acid, 00-t-Butyl O-isopropyl Monoperoxycarbonate (Lupersol TBIV-M75), 2, 5-Dimethyl-2,5-di (benzoyl-peroxy) hexane (Luperox 118), OO-t-butyl O-(2-ethylhexyl) monoperoxycarbonate (Lupersol TBEC), t-Butylperoxy Acetate (Lupersol 70, Lupersol 75-M), t-Butylperoxy Benzoate (t-Butyl Perbenzoate), Di-t-Butyl diperoxyazelate (Lupersol 99), Di-t-Butyl diperoxyphthalate (Lupersol KDB), 2,5-Dihydroperoxy-2,5dimethylhexane), Cumene Hydroperoxide (Cumene Hydroperoxide), t-Butyl Hydroperoxide (t-Butyl Hydroperoxide 70, t-Butyl Hydroperoxide 90, t-Butyl Hydroperoxide 70X), 1,1,3,3-Tetramethyl butyl hydroperoxide (Lupersol 215), t-Amyl hydroperoxide (t-Amyl Hydroperoxide), 1,1-Di (t-butylperoxy) 3,3,5-trimethyl cyclohexane (Lupersol 231, Lupersol 231-XL), 1,1-Di - (t-butylperoxy) cyclohexane (Lupersol 331-80B), 1,1-Di-(t-amylperoxy) cyclohexane (Lupersol 431-80B), 2,2-Di (t-butylperoxy) butane (Luperson 220-D50), Ethyl-3, 3-Di (t-butylperoxy) butyrate (Lupersol 233-M75), 2-t-butylazo 2-cyanopropane (Luazo 79), 2-t-butylazo 2-cyanobutane (Luazo 82), 1-cyano-1-(t-butylazo) cyclohexane (Luazo 96).

Clearly the term "peroxide" is intended to include in the specification and in the claims not only those chemical compounds having a chemical name including the word "peroxide" but also those free radical initiators such as hydroperoxides, peroxydicarbonates, peroxyesters, peroxyketals, and the various luazo initiaters as well as similar chemical compounds. A particular preferred embodiment includes all those compositions wherein the free radical supplier has a half-life as low as 95°C. This level is a good deal lower than those peroxides effective in the Kimberly-Clark composition and process.

Typical concentrate formulas contain about 5 to about 30 percent by weight of the peroxide or even higher. Even at the highest concentrations, essentially all of the peroxide is retained in the final concentrate without measurable degradation using the present invention.

The preferred embodiments and the examples described herein after are not intended to limit the invention. The examples are provided to illustrated embodiments of the invention in some cases the preferred compositions as well as those compositions that perform unsatisfactorily to illustrate the scope of the invention. In some cases, the term "peroxide" and the term "prodegradant" have been using interchangeably, but it should be understood that the scope of this invention is directed to a peroxide concentrate and not to the end use which that peroxide concentrate is applied. Since a popular use for the peroxides is as prodegradants for polypropylene the examples emphasize that utility, but the invention is not so limited.

The criteria for choosing the polymer composition to entrap and carry the peroxide are chosen using certain physical characteristics described as "melt index", "average softening point", and "melting point range".

The "melt index" of the polymeric composition is determined using a melt indexer (ASTM-1238) operated at 190°C with a 2,160 gram weight. Samples are allowed to heat to equilibrium for five minutes prior to testing. The melt index is equivalent to the grams exiting a 0.0828 inch diameter capillary in a period of ten minutes. The term is sometimes abbreviated "MI".

The "softening point" is determined on a Fisher-Johns Melt Point Apparatus wherein the sample is heated on the plate and the temperature noted when the polymer first sticks to a slide. This term is sometimes abbreviated "s.p.".

The "melting point range" is determined using a differential scanning calorimitry (DSC) test run in Argon from 25°C to 150°C, 10°C/minute heating rate; Dupont 990 unit. Using the endotherm plot, a qualitative and somewhat quantitative analysis of the melting characteristics of the composition is easily recognized. The valleys or downward peaks indicate absorption of heat during the change of solid to liquid phase and thus is an indication of the existence of a substantial melt phase at those downward peaks. The existence of two or more substantial downward peaks illustrating a substantial amount of the polymer composition forming a melt phase at two different temperatures separated by at least about 30 centigrade degrees is indicative of a broad range of melting point. It is preferred that the melting point range between these peaks be at least about 40 centigrade degrees and more preferably at least about 50 centigrade degrees.

Examples of polymers using the DSC test show that a mix of 75% AC540 and 25% SURLYN (See Table 1 for polymer identifications) forms a significant melt phase at about 48°C and again at 140°C indicating that a very wide melting point range. A mixture of 25% SURLYN 1702 and 75% AC540 shows some melt in the range of 45°C and 60°C followed by substantial melt at 107°C also indicating a wide melt range. AC580 exhibits an almost a single endotherm peak in the range of 75°C to 89°C indicating a relatively narrow melting point range. If 25% of the acrylic acid in ethylene acrylic acid copolymer is neutralized, the melting point range is 54°C to 94°C indicating a broad range. A particularly effective polymer mix is 60% AC540 and 40% SURLYN 9970 with a melting point range of about 55 centigrade degrees. SURLYN 1855 has a range of 27 centigrade degrees and SURLYN 1856 has a range of 32 centigrade degrees.

The peroxide concentrate of the present invention may be prepared using twin screw (co or counter rotating), Banbury mixers, two roll mills, FCM or single screw extruders as well as other equipment. Generally, as long as the residence time of the peroxide/polymer is in the range of 3 to 4 1/2 minutes at 150°C or 7.5 to 9 minutes at 130°C no observable degradation or cross-linking takes place. If the composition can be processed at 110°C, there are essentially no degradation problems and the residence time may be over 15 minutes with no observable peroxide degradation or cross-linking. Thus the composition with the highest melt indices are preferred with the relatively high average softening point and broad melting point range to assure hot strength at the process melt temperature. The broad melting point range aids effective mixing. Typical residence time in a twin screw extruder is less than three minutes but hang up areas in the die and adapter areas develop much longer local residence times. The wider the melting point range, the greater shear during melt mixing over a broader processing temperature range in the processor, such as an extruder. The higher shear in the polymer promotes mixing of the peroxide and uniform entrainment.

EMA 2207 has the melt index of 8 and an average softening point of 57°C while SURLYN has a melt index of about 15 and an average softening point of about 108°C.

When SURLYN or AC-201 is used in the polymer composition, it is generally necessary to preblend the polymers to form a alloy of the polymers followed by reextruding the alloy with the peroxide.

An important characteristic of the compounds of the present invention is that the peroxide is fully entrained in the polymer and essentially trapped in the concentrate. In the melt condition, the peroxide is released and allowed to exude into the surrounding base thermoplastic polymer.

The following Table 1 is a description of compositions that are used in the compositions of the present invention.

## TABLE 1

ELVAX 240 and 260 (E-240 etc) are ethylene vinyl acetate copolymers available commercially from E. I. DuPont de Nemours Company, Wilmington, Delaware. The grades of ELVAX have 28% of vinyl acetate in the copolymer, have melt indices of 43 and 6 respectively.

AC-540, 580 and 5120 are all ethylene acrylic acid copolymers of low to medium molecular weight available commercially from Allied Corporation, Morris Township, New Jersey. They contain 9%, 11%, and 18% acrylic acid respectively.

AC-201 is low molecular weight ionomer based on ethylene acrylic acid copolymer cross-linked with calcium and other similar compositions described in United States Patent No. 4,381,376 to Paul J. Albee, Jr., et al, incorporated herein by reference.

SURLYN is an ionomer supplied by DuPont, including SURLYN 9970 (Zn), 1855 (Zn), and 1856 (Na).

C-10 is a low molecular weight, low density polyethylene wax of about 1800 melt index supplied commercially by Eastman Kodak, Inc.

C-16 and C-18 are polyethylene waxes on which is grafted maleic amhydride, by Eastman Kodak, Inc.

G3350 is a polyethylene glycol supplied commerically by Union Carbide, Bound Brook, New Jersey.

AC400 is a low molecular weight ethylene vinyl acetate copolymer supplied commerically by Allied Corporation.

OP Wax is a ester wax partially saponified and supplied commerically by Hoechst of Fed. Republic of Germany.

WAX E is an ester wax, supplied commerically by Hoechst.

EMA 2207 is an ethylene methacrylic acid copolymer with a 5 melt index from Gulf Oil Company.

PRIMACOR 5980 (P 5980) is an ethylene acrylic acid copolymer (20%) with a 300 melt index, from Dow Chemical, Midland, Michigan.

VLDPE is a very low density (0.89) polyethylene polymer with a melt index of 2.0, by Union Carbide, Bound Brook, New Jersey.

A preferred polymeric composition in the present invention includes at least two polymers that are chosen with the criteria that the polymers form a homogeneous composition, that the melt index of the composition be in the range of about 250 to about 2500 grams per ten minutes, the average softening point of the composition being in the range of about fifty degrees to about 115 degrees centigrade and that the melting point range of the composition differs by at least about 30 centigrade degrees.

A preferred polymer composition has a melt index in the range of about 300 to about 2000 grams per ten minutes and polymer compositions with melt index of at least about 600 generally perform well on twin screw extruding apparatus. The most preferred polymer composition has a melt index in the range of about 1000 to about 800 grams per ten minutes and it will operate on essentially any type of equipment.

The preferred average softening point range is about 60 to about 115 degrees centigrade and it is more preferred that the softening point range be about 75 to about 110 degrees centigrade. It is preferred that the polymer composition have at least 25% by weight of composition melt at each of the two temperatures of melt illustrated by the end of the endothermpeaks on the DSC unit.

A novel peroxide concentrate composition of matter of this invention includes a peroxide having a half-life as low as 95 degrees centigrade and remaining at least 0.1% active in the concentrate. The preferred composition is ethylene polymers or copolymers and more preferably a polymer or copolymer or mixtures of these polymers or copolymers formed of the monomers chosen from the group consisting of ethylene, vinyl acetate, acrylic acid, methacrylic acid and ethylene glycol. Of course, as indicated above, these compositions may contain at least 5% active peroxide, at least 10% active peroxide or even at least 20% active peroxide and higher. A preferred composition is an ethylene polymer or copolymer, the definition of an "ethylene copolymer" includes ionomers of ethylene copolymers.

A method of producing the peroxide concentrate includes mixing a peroxide compound, at room temperature or injected into the melt with a polymer composition chosen with the above criteria. This physical mixture of peroxide and polymer is heated to a melt and then cooled in a conveniently handleable form, such as through an extruder pelletizing the compound. The polymer composition may be performed by melt mixing of at least two polymers, such as in an extruder and cooling the composition into an easily handleable form, such as pelletizing before mixing with the peroxide compound.

Basically the polymer composition of the present invention may be formed by three methods. Firstly, the polymer composition may be a single polymer such a Primacor 5980. This highly polar copolymer is distinctly low in crystallinity and exhibits a broad melting point range as do other amorphous type polymers. Another single polymer that may be used is AC201 having a broad melting point range and falling within the balance of the criteria. The second mode of polymer preparation is a preblend to form an "alloy" of two or more polymers. Essentially any of the compositions in the examples may be formed in this fashion and for some polymer compositions, it is necessary in order to get a satisfactory mixing and uniformity prior to the condition of peroxide. For these preblended polymer compositions, the combined physical criteria of the present invention is considered.

In the third mode, for some of the more preferred compositions, two or more polymers and the peroxide are mixed together and blended in a single pass through an extruder. These chemical compositions, such as a blend of 60% AC540 and 40% EMA 2207, provide a completely satisfactory product in the preferred range using that technique. Examples of polymer compositions that may be mixed directly with a peroxide and compounded in one pass through a screw extruder to pellets are 40% Gulf EMA 2207/60% C-10 and 50% Primacor 5980/50% AC540.

The following examples illustrate compositions performing as carriers for peroxide compound. All compositions have broad melting point characteristics as tested using DSC. All compositions are combined with Lupersol 101 and other peroxides as supplied in various forms including liquid and adsorbed on fillers to provide concentrates designed to provide ten to twenty percent peroxide by weight in the concentrate composition. The polymer compositions, melt indicies and average softening points are listed in TABLE 2:

## TABLE 2

| EXAMPLE | CARRIER FORMULATION (WGT%) | MELT INDEX | AVG.SFT.PT. |
|---|---|---|---|
| A | 60% AC540-40% SURLYN 9970 | 1230 | 108 |
| B | 40% AC540-60% SURLYN 9970 | 325 | 109 |
| C | 60% AC540-40% EMA 2207 | 1110 | 80 |
| D | 40% AC540-60% EMA 2207 | 580 | 72 |
| E | 60% AC540-40% PRIMACOR 5980 | 1660 | 84 |
| F | 40% AC540-60% PRIMACOR 5980 | 1200 | 82 |
| G | 60% EASTMAN C10-40% ELVAX 240 | 730 | 68 |
| H | 40% EASTMAN C10-60% ELVAX 240 | 410 | 65 |
| I | 60% EASTMAN C10-40% PRIMACOR 5980 | 840 | 89 |
| J | 40% EASTMAN C10-60% PRIMACOR 5980 | 730 | 84 |
| K | 60% EASTMAN C10-40% SURLYN 9970 | 980 | 94 |
| L | 60% PRIMACOR 5980-40% AC-201 | 700 | 104 |

All of the above compositions A though L, containing 10% Lupersol 101, run satisfactorily on a HAKKE BUCHLER System 40 extruder with temperature settings of 110°C at the first three settings with no indication of degradation with a dwell time of over fifteen minutes. Most of the compositions operate for a full fifteen minutes with essentially no degradation when the settings are raised to 130°C. When the settings were increased to 150°C, the dwell time before significant increase in torque evidencing cross-linking is usually less than about seven minutes and in some cases is less than five minutes. Thus, all of the compositions A through L should process satisfactorily on a Banbury mixer and most commercial equipment. Compositions B, D, and H exhibit significantly increased viscosity and cross-linking during extrusion in twin screw commercial size equipment. The rest of the compositions perform well on a twin screw extruder. Most of the mixes are compounded at a temperature below 150°C and a residence time less than three minutes providing quick dispersement of the peroxide prior to activation as evidenced by no polymer rheology changes. AC-201 as well as the other SURLYN polymers substituted for the SURLYN 9970 with excellent results.

The following Examples further illustrate the present invention

Example M Precompounded blends are prepared in the twin screw extruder of 60% Gulf EMA 2207 and 40% EASTMAN C-10 polyethylene wax, 40% Primacor 5980 from Dow and 60% AC540 from Allied Corporation, and 60% SURLYN 9970 and 40% EASTMAN C-18 exhibiting respectively melt indices of 680, 1220, and 1880 and average softening points of 89°C of 92°C and 109°C. These compounds are pelletized, mixed with a peroxide and passed through a twin screw extruder to form a pelletized concentrate having at least 10% unreacted and essentially unaffected peroxide.

Example N The composition mix is prepared of 22% XL130, 31% AC540 and 47% AC201 and extruded on a twin screw with counter rotating screws at 95 RPM, 6 AMP with a five bar pressure and 700 PSI vacuum. The melt temperature was calculated to be at 93°C with zones 1 through 8 being controlled at 120°C, 125°C, 105°C, 90°C, 85°C, and 80°C respectively. The concentrate extrudes well with a smooth uniform surface and good homogeneity.

Example O A mixture of 60% of AC540 and 40% ELVAX 240 provides a homogeneous uniform peroxide concentrate.

Example P A mixture of 40% VLDPE (0.89 density with a melt index of 2.0) and 60% AC540 provides a nonuniform mix during the attempted preparation of an alloy so that no concentrate could be prepared.

Example Q An attempted one pass of a peroxide mix of 40% SURLYN and 60% AC540 forms a nonhomogeneous concentrate requiring preparation of a polymer alloy followed by mixing and reextrusion with a peroxide.

Example R A composition of 50% AC580 and 50% SURLYN 9907 is extruded to form an alloy in pelletized form, mixed with 10% peroxide and extruded with an output rate of 160 pounds per hour through a twin screw extruder. A concentrate of 20% peroxide also runs well on the extruder.

Example S. A peroxide concentrate is prepared by introducing a peroxide, such as cumene hydroperoxide, to Primacore 5980 (MI = 300 and S.P. = 50°C) or to AC-201 (MI 1200 and S.P. = 104°C) which is extruded and pelletized.

Examples T through X. Preblended polymer alloys are prepared in pelletized form as listed in Table 3.

## TABLE 3

| EXAMPLE | COMPOSITION (Wgt.%) | MELT INDEX | AVG.SFT.PT. |
|---------|---------------------|------------|-------------|
| T | 40% E-240/60% AC540 | 1750 | 65 |
| U | 30% E-240/70% AC540 | 2350 | 68 |
| V | 20% SURLYN/80% AC540 | 2480 | 106 |
| W | 30% SURLYN/70% AC-540 | 1850 | 106 |
| X | 40% AC-316/60% | 580 | 114 |

Polymer alloys "T" through "X" are melt blended with 10% and 20% peroxide to form effective concentrates.

Example Y. The acrylic acid functionality in AC-540 is neutralized with calcium to a level of 50% to form a polymer with a melt index of 2490 and a softening point of 104°C. This polymer is melt blended with peroxides to form effective concentrates.

While this invention has been described with reference to the specific embodiments disclosed herein, it is not confined to the details set forth and the patent is intended to include modifications and changes which may come within and extend from the following claims.

**Claims**

1. A polymer composition to be used for a carrier for peroxide compounds, characterized by comprising a homogeneous polymer composition having the following criteria:

(a) the melt index of the composition is in the range of about 250 to about 2500 grams per ten minutes,

(b) the average softening point of the composition is in the range of about 50 degrees to about 115 degrees centigrade, and

(c) the melting point range of the composition has at least two significant temperatures of melt and that a substantial portion of the composition is characterized by each of the two melt temperatures.

2. The polymer composition of claim 1, characterized in that there are at least two polymers forming the homogeneous polymer composition.

3. The polymer composition of claim 1 or 2, characterized in that the melt index of the homogeneous composition is in the range of about 300 to about 2000 grams per ten minutes.

4. The polymer composition of any one of claims 1 to 3, characterized in that the average softening point of the homogeneous composition is in the range of about 60 to about 115 degrees centigrade.

5. The polymer composition of any one of the preceding claims, characterized in that the range difference between the temperatures of melt of the polymer composition differ by at least about 30 centigrade degrees.

6. A polymeric composition to act as a carrier for peroxide compounds, characterized by comprising at least two polymers that are chosen with the following criteria:

(a) that the polymers form a homogeneous composition,

(b) that the melt index of the composition be in the range of about 250 to about 2500 grams per minutes,

(c) that the average softening point of the composition be in the range of about 30 degrees to about 115 degrees centigrade, and

(d) that the melting points of the components differ by at least about 40 centigrade degrees.

7. A peroxide compound concentrate, characterized by comprising:

(a) a peroxide catalyst, and

(b) a homogeneous polymer composition having the following criteria:

(i) the polymer composition having a melt index in the range of about 300 to about 2500 grams per ten minutes,

(ii) the polymer composition having an average softening point in the range of about 50 degrees to about 115 degrees centigrade, and

(iii) the polymer composition having a broad melting point range having at least two melt temperature peaks in which a substantial portion of the polymer composition forms a melt phase.

8. The polymer composition of claim 7, characterized in that the range difference between the temperatures of melt of the polymer composition differ by at least about 30 degrees centigrade.

9. a polymer composition, characterized by comprising:

(a) a peroxide having a one hour half-life as low as about 95°C. remaining at least 0.1% active, and

(b) a polymer or copolymer of those monomers chosen from the group consisting of ethylene, vinyl acetate, acrylic acid, methacrylic acid and ethylene glycol.

10. A method of producing a peroxide compound concentrate, characterized by comprising:

(a) mixing a peroxide compound with a polymer composition chosen with the following criteria:

(i) the melt index of the composition is in the range of about 250 to about 2500 grams per ten minutes,

(ii) the average softening point of the composition be in the range of about 50 degrees to about 115 degrees centigrade, and

(iii) the melting point range of the composition has at least two significant temperatures of melt and that a substantial portion of the composition is characterized by each of the two melting temperatures,

(b) heating the mixture of peroxide and polymer composition to a melt, and

(c) cooling the mixture in a conveniently handleable form.